# EUROPEAN PATENT APPLICATION

(11) **EP 3 686 643 A1**
(43) Date of publication of application: **29.07.2020**
(21) Application number: 19153641.6
(22) Date of filing: 25.01.2019
(51) Int. Cl.: G02B 21/00, G01N 21/64

(54) **PULSE SHAPING FOR STIMULATED EMISSION DEPLETION MICROSCOPY**

(71) Applicant: Hochschule für angewandte Wissenschaften München, 80335 München (DE)
(72) Inventor: Hellerer, Thomas, 81377 München (DE); Polzer, Christoph, 82008 Unterhaching (DE)
(74) Representative: Lucke, Andreas

(57) **Abstract**

Disclosed herein is a pulse-shaping method for stimulated emission depletion (STED) mi-croscpy. The method comprises generating an optical excitation/depletion pulse with a depletion wavelength λ_{d}; splitting the excitation/depletion pulse in time into an excitation part and a depletion part such that the excitation part and the depletion part propagate along an optical axis and are separated by a time delay Δt; creating an effective phase difference Δϕ between the excitation part and the depletion part; and focusing the excitation part and the depletion part of the excitation/depletion pulse onto a focus point, wherein the time delay Δt and the effective phase difference Δϕ are chosen such that an intensity distribution of the excitation/depletion pulse has a local maximum at the focus point at a first time and a local minimum at the focus point at a second time.

## Description

### FIELD OF THE INVENTION

The present invention is in the field of physics and biology. In particular, the invention relates to a method and a device to shape optical pulses for stimulated emission depletion microscopy.

### BACKGROUND

Super-resolution microscopy enables optical imaging of samples with a spatial resolution below the diffraction limit and is of great relevance in particular for the imaging of biological samples, e.g. cells. A prominent example thereof is stimulated emission depletion (STED) microscopy. To achieve a resolution below the diffraction limit, STED relies on the suppression of spontaneous fluorescence of an imaging marker by rapid depletion of excited states through stimulated emission.

In a conventional confocal fluorescence microscope, an excitation laser beam is focused onto a sample and can excite imaging markers at the focus to an excited electronic state. The excited imaging markers can spontaneously decay to the electronic ground state and emit fluorescence photons, which may be detected to image the imaging markers. The imaging resolution is determined by the focus size of the excitation beam and may thus be limited by the diffraction limit.

In a STED microscope, the excitation laser beam is overlapped with a depletion beam, which can transfer imaging markers from the excited electronic state to the ground state by stimulated emission. At the focus, the depletion beam may e.g. exhibit a doughnut-like intensity distribution with a pronounced minimum at the center such that excited imaging markers outside of a center region can be transferred to the ground state before spontaneous emission can take place. Imaging markers outside of the center region can thus be effectively switched off such that only imaging markers within the center region contribute to the signal. The size of the center region depends on the power of the depletion beam and can be smaller than the diffraction limit since the probability for an imaging marker to remain in the excited state scales non-linearly with the intensity of the depletion beam. This can require a high-power depletion beam, which may damage the sample. To reduce the impact on the sample, pulsed excitation and depletion may be used. The signal-to-noise ratio of the imaging may be improved by background suppression using time-resolved detection in combination with a second depletion pulse with a Gaussian intensity profile to deplete imaging markers in the center region following the first depletion pulse, see P. Gao et al., Nature Photonics 11, 163 (2017*).*

To prevent re-excitation by the depletion beam, the excitation beam and the depletion beam can address different vibrational states in the energy spectrum of the imaging markers. Thus, their wavelengths are in general different such that two laser sources may be required. Using two-photon processes for excitation of the imaging markers may allow for using the same wavelength for the excitation and depletion beam, see P. Bianchini et al., Proc. Natl. Acad. Sci. U.SA. 109, 6390 (2012*).* This approach, however, is limited to imaging markers exhibiting a sufficiently large Stokes shift. Furthermore, improving the resolution requires a precise overlapping of the excitation and depletion beams, which can make the alignment tedious. To simplify the alignment, both beams may be coupled into the same optical fiber. But in this case, special beam shaping elements can be required to simultaneously generate the desired intensity profiles for the excitation and depletion beams, see D. Wildanger et al., Journal of Microscopy, 236, 35 (2009*)* and M. Reuss et al., Optics Express 18, 1049 (2010*).* This may have detrimental effects on the quality of the intensity profiles and hence affect the resolution, see e.g. F. Görlitz et al., Progress In Electromagnetics Research 147, 57 (2014*).*

### SUMMARY OF THE INVENTION

The object of the invention is thus to provide a method and a device that simplify the alignment of a stimulated emission depletion (STED) microscope and improve its resolution, while reducing the required laser power.

This object is met by a method and a device according to Claim 1 and 8, respectively. Embodiments of the present invention are detailed in the dependent claims.

The pulse-shaping method for stimulated emission depletion microscopy comprises the following steps: (1) generating an optical excitation/depletion pulse with a depletion wavelength λ_{d}; (2) splitting the excitation/depletion pulse in time into an excitation part and a depletion part such that the excitation part and the depletion part propagate along an optical axis and are separated by a time delay Δt; (3) creating an effective phase difference Δϕ between the excitation part and the depletion part; and (4) focusing the excitation part and the depletion part of the excitation/depletion pulse onto a focus point. The time delay Δt and the effective phase difference Δϕ are chosen such that an intensity distribution of the excitation/depletion pulse has a local maximum at the focus point at a first time and a local minimum at the focus point at a second time. The numbering of the steps above is for clarity only and does not indicate a certain order of execution. As far as technically feasible, the steps can be permuted and the method and any embodiment thereof can be performed in an arbitrary order of these steps. In particular, steps may be performed simultaneously at least in part.

At first, the optical excitation/depletion pulse with the depletion wavelength λ_{d} is generated. Preferably, the excitation/depletion pulse is a coherent light pulse, e.g. a laser pulse. The excitation/depletion pulse may for example be generated from a pulsed laser source, e.g. a picosecond or femtosecond laser source. The laser source may for example be a mode-locked, q-switched or gain-switched laser source. Alternatively, the excitation/depletion pulse may be generated from a continuous-wave laser source, e.g. by modulating an output of the continuous-wave laser source with an acousto-optic modulator, an electro-optic modulator, a mechanical shutter or a combination thereof. A pulse duration of the excitation/depletion pulse may for example be in the range between 100 fs and 10 ns, preferably between 1 ps and 1 ns. The depletion wavelength is the center wavelength of the excitation/depletion pulse in vacuum and may for example be between 400 nm and 2200 nm. The excitation/depletion pulse may for example have a Gaussian or a flat-top spatial intensity profile in the plane perpendicular to the propagation direction.

The excitation/depletion pulse is then split in time into the excitation part and the depletion part. Splitting in time refers to a splitting such that the excitation part and the depletion part are separated by the time delay Δt, but propagate along the same optical axis, i.e. the excitation part and the depletion part are not separated spatially by changing their propagation direction. The time delay Δt is the time difference between the arrival of the depletion part and of the excitation part at a given point along the optical axis, e.g. the focus point. The excitation/depletion pulse may for example be split by making the optical path lengths for the excitation part and depletion part different as detailed below. The excitation part and the depletion part may have different intensity distributions perpendicular to the optical axis. The excitation part and the depletion part may have the same pulse duration, e.g. equal to the pulse duration of the excitation/depletion pulse, or may have different pulse durations.

Furthermore, the effective phase difference Δϕ is created between the excitation part and the depletion part. The effective phase difference Δϕ is the phase difference between the electric field of the excitation part and the electric field of depletion part, wherein the effective phase difference Δϕ is between 0 and 2π. In other words, the effective phase difference Δϕ can be regarded as an actual phase difference modulo 2π. Correspondingly, the effective phase difference Δϕ may determine how the excitation part and the depletion part interfere to generate the intensity distribution of the excitation/depletion pulse. The effective phase difference Δϕ may for example be created by making the optical path lengths for the excitation part and depletion part different as detailed below.

The excitation part and the depletion part are focused onto the focus point, e.g. by an objective through which the excitation/depletion pulse passes after the splitting. Preferably, the excitation part and the depletion part are focused tightly such that a waist of the intensity distribution of the excitation/depletion pulse at the focus point is smaller than the depletion wavelength λ_{d} at the first and/or second time. The waist is defined as the largest radial distance at which the intensity of the excitation/depletion pulse is 1/e² of a global maximum of the intensity distribution of the excitation/depletion pulse, wherein a radial direction is perpendicular to the propagation direction of the excitation/depletion pulse.

As a result of the splitting of the excitation/depletion pulse, the intensity distribution of the excitation/depletion pulse in the vicinity of the focus point varies as a function of time. The time delay Δt and the effective phase difference Δϕ are chosen such that the intensity distribution exhibits a local maximum, preferably a global maximum, at the focus point at the first time, whereas the intensity distribution has a local minimum at the focus point at the second time. The time delay Δt may e.g. be chosen such that only the excitation part has arrived at the focus point at the first time. Correspondingly, the intensity distribution of the excitation/depletion pulse at the first time may be determined by the intensity distribution of the excitation part. A phase pattern and/or an intensity distribution of the excitation part before the objective may be such that the intensity distribution of the excitation part has a local maximum at the focus point. In one example, the time delay Δt may further be chosen such that the depletion part has arrived at the focus point at the second time while the excitation part has not yet passed the focus point entirely. The intensity distribution of the excitation/depletion pulse at the second time may thus be determined by interference between the depletion part and the excitation part. The effective phase difference Δϕ may e.g. be such that the depletion part and the excitation part interfere destructively at the focus point. In another example, the time delay Δt may be chosen such that the excitation part has already passed the focus point at the second time. Accordingly, the intensity distribution of the excitation/depletion pulse at the second time may be determined by the intensity distribution of the depletion pulse. A phase pattern and/or an intensity distribution of the depletion part before the objective may be such that the intensity distribution of the depletion part has a local minimum at the focus point.

By generating such an intensity distribution from a single pulse, the method may facilitate alignment of a STED microscope. At the first time, the excitation/depletion pulse may be used to excite imaging markers in a sample to an excited state, e.g. by two-photon excitation. In some cases, the excitation/depletion pulse may excite imaging markers via two-photon excitation, in particular two-color two-photon excitation, in conjunction with an auxiliary excitation pulse as detailed below. As the intensity distribution of the excitation/depletion pulse has a local maximum at the focus point at the first time, the excitation probability of the imaging markers may also exhibit a local maximum at the focus point. Preferably, only imaging markers in a small excitation region around the focus point are excited. At the second time, the excitation/depletion pulse may be used to deplete the excited state of the imaging markers via stimulated emission. Since the local minimum of the intensity distribution of the excitation/depletion pulse at the second time is aligned with the local maximum at the first time, i.e. at the focus point, the depletion probability may exhibit a minimum where the excitation probability exhibits a maximum. Accordingly, the center region in which the imaging markers are not effectively switched off by stimulated emission may be aligned with the excitation region. This may improve the resolution of the STED microscope and may reduce the intensity required for the excitation and/or depletion.

In a preferred embodiment, the intensity of the excitation/depletion pulse at the focus point at the second time is less than 1%, preferably less than 0.1% of a global maximum of the intensity distribution of the excitation/depletion pulse at the second time. Thereby, effective depletion of excited markers outside the center region may be achieved while reducing the depletion probability at the focus point, e.g. to increase a signal from the center region. The intensity of the excitation/depletion pulse at the second time may increase strongly when going away from the focus point, e.g. by a factor of more than 50, preferably more than 500, in every radial direction, preferably in every direction. A size of a region around the focus point in which the intensity is less than 1% of the global maximum of the intensity distribution of the excitation/depletion pulse at the second time may be less than 20% of the depletion wavelength in at least one direction, preferably in every radial direction.

The excitation/depletion pulse may for example be split using a phase mask with a spatially varying optical path length, e.g. a transmissive phase mask through which the excitation/depletion pulse passes or a reflective phase mask that the excitation/depletion pulse is reflected off. The optical path length is the optical path length at the depletion wavelength and determines the phase shift that light at the depletion wavelength acquires when traversing the phase mask or being reflected by the phase mask. At a given position, the optical path length of a transmissive phase mask is equal to the product of the thickness of the phase mask at that position and the average index of refraction of the phase mask at that position along the propagation direction of the excitation/depletion pulse. The phase mask may e.g. comprise a first region with a first optical path length, e.g. a first thickness and/or first index of refraction, and a second region with a second optical path length, e.g. a second thickness and/or a second index of refraction. The excitation part may be the part of the excitation/depletion pulse that passes through the first region and the depletion part may be the part of the excitation/depletion pulse that passes through the second region. The difference between the optical path lengths may then determine the time delay Δt. The phase mask may also be used for creating the effective phase difference Δϕ, wherein the difference between the optical path lengths may determine the time delay Δt and the effective phase difference Δϕ. Alternatively, a first phase mask may be used for splitting the excitation/depletion pulse by the time delay Δt and a second phase mask may be used for creating the effective phase difference Δϕ. The optical path length may be constant within one region or may vary spatially, e.g. to imprint a phase pattern on the respective part of the excitation/depletion pulse as detailed below. The phase mask may exhibit a dispersion, i.e. a wavelength-dependent optical path length, e.g. to compress or stretch the excitation part and/or the depletion part. In one example, the first region has a negative dispersion and the second region has a positive dispersion, wherein a positive (negative) dispersion corresponds to an optical path length that increases (decreases) with the wavelength.

In another example, the excitation/depletion pulse may be split by retro-reflecting the excitation/depletion pulse by a mirror with a spatially varying thickness such that a reflective surface of the mirror is located at different positions along the optical axis. The mirror may for example comprise two planar regions, one located at a first position along the optical axis to reflect the excitation part and the other located at a second position along the optical axis to reflect the depletion part. The mirror may furthermore be used to create the effective phase difference Δϕ. Alternatively, a phase mask may be used to create the effective phase difference Δϕ. In yet another example, an electro-optic modulator may be used for splitting the excitation/depletion pulse and/or creating the effective phase difference Δϕ, e.g. an electro-optic modulator with a spatially varying electric field and/or an active medium with two regions with different electro-optic properties.

Prior to focusing, the excitation part may for example have a circular or elliptical intensity distribution and the depletion part may have an annular intensity distribution. A circular intensity distribution is to be understood as an intensity distribution for which the light is confined within a circle with a radius R around the optical axis, whereas an elliptical intensity distribution is an intensity distribution for which the light is confined within an ellipse around the optical axis. The circular intensity distribution may be symmetric around the optical axis. In one example, the intensity within the circle or the ellipse may be homogeneous or may vary by less than 25%, preferably less than 10%. An annular intensity distribution is to be understood as an intensity distribution for which the light is confined to an annulus between an inner circle or ellipse and an outer circle or ellipse around the optical axis. The inner circle may have a first radius R₁ and the outer circle a second radius R₂. The first radius R₁ may e.g. be equal to the radius R. The annular intensity distribution may be symmetric around the optical axis. In one example, the intensity within the annulus may be homogeneous or may vary by less than 25%, preferably less than 10%. To create the excitation part with a circular intensity distribution and the depletion part with an annular intensity distribution, a phase mask with a circular or elliptical inner region and an annular outer region surrounding the inner region may for example be used.

The effective phase difference Δϕ between the excitation part and the depletion part may for example be between 0.9π and 1.1π, preferably between 0.99π and 1.01π. Thereby, the excitation part and depletion part may interfere destructively at the focus point, e.g. to create the local minimum of the intensity distribution of the excitation/depletion pulse at the second time.

The time delay may for example be larger than 5 times the period corresponding to the depletion wavelength. In a preferred embodiment, the time delay is larger than 50 times the period corresponding to the depletion wavelength, preferably larger than 200 times the period corresponding to the depletion wavelength. The period corresponding to the depletion wavelength is the inverse of the optical frequency v_{d} corresponding to the depletion wavelength. In one example, the time delay may be between 100 fs and 1000 fs. A large time delay may e.g. allow for maintaining the intensity distribution of the excitation/depletion pulse at the first time for an extended period of time, e.g. the time delay. This may for example be advantageous when using the excitation part to excite imaging markers, e.g. to achieve a certain excitation probability at the focus point.

Splitting the excitation/depletion pulse may further comprise compressing and/or stretching the excitation part and/or the depletion part in time, e.g. using a dispersive phase mask with a wavelength-dependent optical path length. In one example, the excitation part is compressed such that the pulse duration of the excitation part is shorter than the pulse duration of the excitation/depletion pulse and/or the depletion part is stretched or chirped such that the pulse duration of the depletion part is longer than the pulse duration of the excitation/depletion pulse.

Creating the effective phase difference Δϕ between the excitation part and the depletion part may further comprise imprinting a phase pattern onto the excitation part and/or the depletion part. Imprinting a phase pattern refers to locally modifying the phase of the electric field of the respective part by a phase shift ϕ(x,y), wherein the phase shift ϕ at a given position (x, y) perpendicular to the propagation direction of the respective part is determined by the phase pattern. A phase pattern may for example be imprinted using a phase mask with a spatially varying optical path length.

Preferably, the depletion wavelength is chosen to be resonant with a depletion transition of an imaging marker, wherein a depletion transition is a transition between two states of the imaging marker that may be induced by the excitation/depletion pulse through stimulated emission. The depletion transition may be a transition between two electronic states of imaging marker, e.g. an excited electronic state and an electronic ground state. Preferably, the depletion transition is a transition between a metastable state and a state with a short lifetime, e.g. a metastable state with a lifetime larger than 0.1 ns and a state with a lifetime shorter than 100 fs. The depletion transition may for example be a transition between a vibrational ground state of the excited electronic state and an excited vibrational state of the electronic ground state, e.g. to avoid excitation of the imaging marker by the excitation/depletion pulse. The imaging marker may e.g. be a fluorophore like a fluorescent protein or a nitrogen-vacancy center, which may for example be used to label constituents of a sample to be imaged.

In a preferred embodiment, the method also comprises generating an optical auxiliary excitation pulse with an excitation wavelength λ_{exc}. The auxiliary excitation pulse may for example be generated from a pulsed laser source, e.g. a picosecond or femtosecond laser source. The laser source may for example be a mode-locked, q-switched or gain-switched laser source. Alternatively, the auxiliary excitation pulse may be generated from a continuous-wave laser source, e.g. by modulating an output of the continuous-wave laser source with an acousto-optic modulator, an electro-optic modulator, a mechanical shutter or a combination thereof. A pulse duration of the auxiliary excitation pulse may for example be in the range between 50 fs and 10 ps, preferably between 100 fs and 1 ps. The excitation wavelength is the center wavelength of the auxiliary excitation pulse in vacuum and may for example be between 400 nm and 2200 m. The auxiliary excitation pulse may for example have a Gaussian or a flat-top spatial intensity profile in the plane perpendicular to the propagation direction.

Furthermore, the method may comprise temporally and spatially overlapping the optical auxiliary excitation pulse with the excitation part of the excitation/depletion pulse. The auxiliary excitation pulse and the excitation/depletion pulse may for example be spatially overlapped with a dichroic mirror or a beam splitter, in particular a polarizing beam splitter, such that the auxiliary excitation pulse and the excitation/depletion pulse propagate along the same optical axis. In other examples, the auxiliary excitation pulse and the excitation part may propagate along different optical axes and may only be overlapped at the focus point. Preferably, the auxiliary excitation pulse and the excitation/depletion pulse are overlapped such that an intensity distribution of the auxiliary excitation pulse has a local maximum at the focus point. The auxiliary excitation pulse and the excitation/depletion pulse, in particular the excitation part, may have different polarizations, e.g. orthogonal linear polarizations or opposite circular polarizations. To temporally overlap the auxiliary excitation pulse with the excitation part of the excitation/depletion pulse, an emission time of the auxiliary excitation pulse and/or the excitation/depletion pulse may be adjusted. Additionally or alternatively, an optical path length for the auxiliary excitation pulse and/or the excitation/depletion pulse may be adjusted. The auxiliary excitation pulse and the excitation part are temporally overlapped if a time delay between the auxiliary excitation pulse and the excitation part is smaller than the pulse duration of the auxiliary excitation pulse. In one example, the time delay between the auxiliary excitation pulse and the excitation part may be smaller than 25%, preferably smaller than 10%, of the pulse duration of the auxiliary excitation pulse.

Preferably, the excitation wavelength and the depletion wavelength are chosen such that a two-photon excitation involving a photon having the excitation wavelength and a photon having the depletion wavelength is resonant with a two-photon excitation of an excitation transition of the imaging marker. The excitation transition is a transition between two states of the imaging marker that may be induced by absorption of one or more photons. The excitation transition may be a transition between two electronic states of imaging marker, e.g. an electronic ground state and an excited electronic state. Preferably, the excitation transition is a transition to a state with a short lifetime, e.g. a state with a lifetime shorter than 100 fs. The excitation transition may for example be a transition between a vibrational ground state of the electronic ground state and an excited vibrational state of the excited electronic state.

In a preferred embodiment, the excitation wavelength is different from the depletion wavelength. Thereby, an imaging marker may be excited through a two-photon transition by absorbing one photon from the auxiliary excitation pulse and one from the excitation/depletion pulse, while preventing two-photon excitations by the excitation/depletion pulse itself. Compared to single-color two-photon excitation, two-color two-photon excitation offers greater flexibility with respect to the imaging markers that can be used. In particular, the excitation and/or depletion wavelength may be adjusted to an energy spectrum of the imaging markers and thus may not require imaging markers with a large Stokes shift. Two-photon excitation may be advantageous to reduce the size of the excitation region in which imaging markers are excited since the excitation probability depends on the intensity distribution of both the excitation/depletion pulse and the auxiliary excitation pulse. Furthermore, as a photon from the excitation/depletion pulse is required for excitation, the excitation probability may be largest at the focus point, where the intensity distribution of the excitation/depletion pulse has a local maximum at the first time. Therefore, the excitation area may be automatically aligned with the local minimum of the intensity distribution of the excitation/depletion pulse at the second time. In one example, the auxiliary excitation pulse and the excitation part have opposite circular polarizations, e.g. to suppress single-color two-photon excitations by photons from a single pulse.

The time delay Δt may for example be between 75% and 125%, preferably between 90% and 110%, of the pulse duration of the auxiliary excitation pulse. This may allow for achieving a large temporal overlap between the auxiliary excitation pulse and the excitation part while at the same time reducing the temporal overlap between the auxiliary excitation pulse and depletion part. In one example, the auxiliary excitation pulse and the excitation part may arrive at the focus point at the same time and the time delay Δt may be equal to the pulse duration of the auxiliary excitation pulse such that the depletion part arrives at the focus point when the auxiliary excitation pulse has just passed the focus point.

The present invention also provides a pulse-shaping device for stimulated emission depletion (STED) microscopy. The device comprises a pulse shaper configured for splitting an optical excitation/depletion pulse with a depletion wavelength λ_{d} into an excitation part and a depletion part. The pulse shaper is configured to split the excitation/depletion pulse in time such that the excitation part and the depletion part propagate along an optical axis and are separated by a time delay Δt. The pulse shaper is further configured to create an effective phase difference Δϕ between the excitation part and the depletion part. The time delay Δt and the effective phase difference Δϕ are such that the excitation/depletion pulse, when focused onto a focus point, has an intensity distribution with a local maximum at the focus point at a first time and an intensity distribution with a local minimum at the focus point at a second time. The pulse shaper may be adapted to a specific phase pattern and/or intensity distribution of the incoming excitation/depletion pulse, e.g. a Gaussian or flat-top profile with a constant phase, or may be adjustable to various phase patterns and/or intensity distributions to realize the desired intensity distribution at the focus point.

The pulse shaper may for example comprise a mirror that is configured to retro-reflect the excitation/depletion pulse. The mirror may e.g. comprise two regions with different thickness such that the reflective surface in the two regions is located at different positions along the optical axis, e.g. to create the time delay Δt and/or the effective phase difference Δϕ between the parts of the excitation/depletion pulse reflected off the two regions. Alternatively or additionally, the pulse shaper may comprise an electro-optic modulator, e.g. an electro-optic modulator with a spatially varying electric field and/or an active medium with two regions with different electro-optic properties.

In a preferred embodiment, the pulse shaper comprises a phase mask with a spatially varying optical path length at the depletion wavelength, e.g. to split the excitation/depletion pulse and/or to create the effective phase difference Δϕ. The phase mask may for example be a transmissive or reflective phase mask. The phase mask may e.g. comprise a first region with a first optical path length, e.g. a first thickness and/or first index of refraction, and a second region with a second optical path length, e.g. a second thickness and/or a second index of refraction. The difference between the optical path lengths may be such that the parts of a laser pulse passing through the two regions have the time delay Δt and/or the effective phase difference Δϕ. The optical path length difference may be expressed as Δl = (*m* + δ*m*) λ_{d}, wherein m is integer and 0 ≤ δ*m* < 1. The time delay Δt is then given by Δt = (*m*+ δ*m*)/v_{d} and the effective phase difference Δϕ by Δϕ = 2π δ*m*, wherein v_{d} is the optical frequency corresponding to the depletion wavelength. The optical path length may be constant within one region or may vary spatially, e.g. to imprint a phase pattern on the respective part of the excitation/depletion pulse. In some examples, the phase mask may be an adaptive phase mask like a liquid-crystal spatial light modulator. The adaptive phase mask may be configured to adapt the local optical path length to a phase pattern and/or intensity distribution of the excitation/depletion pulse at the position of the phase mask.

The phase mask may for example comprise a circular or elliptical inner portion with a first optical path length at the depletion wavelength and an annular outer portion with a second optical path length at the depletion wavelength. The inner portion may e.g. be a circle with a first radius R₁ and the annular outer portion may e.g. be a ring with an inner radius R₁ and an outer radius R₂, which surrounds the inner portion. The phase mask may for example have a homogeneous composition, e.g. consisting of a material like BK₇ glass or fused silica, and may have a first thickness in the inner portion and a second thickness in the outer portion. In one example, the first thickness may be zero, i.e. the inner portion may be a hole in the phase mask. Alternatively or additionally, the phase mask may consist of or comprise different materials in the inner portion and the outer portion, e.g. a material with a larger index of refraction in the outer portion and a material with a smaller index of refraction in the inner portion.

A difference between the first and second optical path lengths may for example be between (*m*+0.45) λ_{d} and (*m*+0.55) λ_{d}, preferably between (*m*+0.495) λ_{d} and (*m*+0.505) λ_{d}, wherein *m* is an integer. Thereby, an effective phase difference Δϕ between 0.9π and 1.1π, preferably between 0.99π and 1.01π, may be achieved. In one example, *m* may be larger than 5, e.g. to induce a time delay larger than 5 times the period corresponding to the depletion wavelength. In a preferred embodiment, *m* may be larger than 50, preferably larger than 200, e.g. to induce a time delay larger than 50 times the period corresponding to the depletion wavelength, preferably larger than 200 times the period corresponding to the depletion wavelength.

The pulse shaper may be configured to compress and/or stretch a pulse duration of the excitation part and/or the depletion part. The pulse shaper may comprise a dispersive phase mask with a wavelength-dependent optical path length. In one example, the phase mask comprises a first region and a second region, wherein the first region has a negative dispersion and the second region has a positive dispersion. A positive (negative) dispersion corresponds to an optical path length that increases (decreases) with the wavelength.

The pulse shaper may further be configured to imprint a phase pattern onto the excitation part and/or the depletion part. The pulse shaper may comprise a phase mask with a spatially varying optical path length configured to imprint a phase pattern onto the excitation part and/or the depletion part. In one example, the phase mask is configured to imprint a vortex-like phase pattern on the depletion part, wherein a vortex-like phase pattern is a phase pattern with a phase that increases linearly from 0 to 2π in the azimuthal direction around the propagation direction.

The device may further comprise a depletion laser source configured to emit the excitation/depletion pulse. The depletion laser source may for example be a pulsed laser source, e.g. a picosecond or femtosecond laser source. The depletion laser source may e.g. be a mode-locked or q-switched laser source. In a preferred embodiment, the depletion laser source is a gain-switched laser source, e.g. a gain-switched diode laser configured to adjust an injection current for a laser diode to generate pulses. In other examples, the depletion laser source may comprise a continuous-wave laser source and a pulse shaping unit that is configured to modulate a laser beam emitted by the continuous-wave laser source to generate the excitation/depletion pulse. The pulse shaping unit may e.g. comprise a mechanical shutter, an acousto-optic modulator, an electro-optic modulator or a combination thereof. A pulse duration of the excitation/depletion pulse may for example be in the range between 100 fs and 10 ns, preferably between 1 ps and 1 ns. The depletion wavelength may for example be between 400 nm and 2200 nm. The depletion laser source may further comprise beam shaping elements, for example to adjust the spatial intensity distribution of the excitation/depletion pulse. In one example, the depletion laser source may be configured to emit the excitation/depletion laser pulse with a Gaussian intensity profile or a flat-top intensity profile. The depletion laser source may further be configured to adjust a pulse energy or pulse duration of the excitation/depletion pulse. In some examples, a wavelength of the depletion laser source may be tunable.

In a preferred embodiment, the pulse shaper is configured to split the excitation/depletion pulse such that an average pulse power of the excitation part is between 90% and 110%, preferably between 99% and 101%, of an average pulse power of the depletion part. The pulse shaper may in particular be adapted to a spatial intensity profile of the excitation/depletion pulse at the position of the pulse shaper. For example, when the pulse shaper comprises a phase mask with two regions as described above, the size of the regions may be adapted to control the average pulse powers of the excitation part and/or the depletion part. In one example, the radius R₁ may be adapted such that the excitation part and depletion part have the same average pulse power. A comparable average pulse power may e.g. be advantageous to reduce the intensity of the excitation/depletion pulse at the focus point at the second time.

The device may further comprise an objective configured to focus the excitation/depletion pulse onto the focus point. The objective may for example be a high-NA objective with a numerical aperture larger than 0.5. Preferably, the objective is configured to focus the excitation part and the depletion part such that a waist of the intensity distribution of the excitation/depletion pulse at the focus point is smaller than the depletion wavelength λ_{d} at the first and/or second time.

The device may also comprise an excitation laser source configured to emit an auxiliary excitation pulse with an excitation wavelength λ_{exc}, wherein the auxiliary excitation pulse is spatially overlapped with the excitation/depletion pulse. The excitation laser source may for example be a pulsed laser source, e.g. a picosecond or femtosecond laser source. The excitation laser source may e.g. be a mode-locked or q-switched laser source. In a preferred embodiment, the excitation laser source is a gain-switched laser source, e.g. a gain-switched diode laser configured to adjust an injection current for a laser diode to generate pulses. In other examples, the excitation laser source may comprise a continuous-wave laser source and a pulse shaping unit that is configured to modulate a laser beam emitted by the continuous-wave laser source to generate the auxiliary excitation pulse. The pulse shaping unit may e.g. comprise a mechanical shutter, an acousto-optic modulator, an electro-optic modulator or a combination thereof. A pulse duration of the auxiliary excitation pulse may for example be in the range between 50 fs and 10 ps, preferably between 100 fs and 1 ps. The excitation wavelength may for example be between 400 nm and 2200 m. The excitation laser source may further be configured to adjust a pulse energy or pulse duration of the auxiliary excitation pulse. In some examples, a wavelength of the excitation laser source may be tunable. For spatially overlapping the auxiliary excitation pulse with the excitation/depletion pulse, the device may comprise an optical element like a dichroic mirror or a beam splitter, e.g. to overlap the auxiliary excitation pulse and the excitation/depletion pulse such that the auxiliary excitation pulse and the excitation/depletion pulse propagate along the same optical axis. The optical element for overlapping may be adjustable, e.g. to optimize a spatial overlap between the auxiliary excitation pulse and the excitation/depletion pulse at the focus point. In another example, the device may comprise an adjustable optical element like an adjustable mirror configured to align the auxiliary excitation pulse to the focus point, e.g. to overlap the excitation pulse with the excitation/depletion pulse at the focus point of the excitation/depletion pulse when both pulses are propagating along different optical axes.

Furthermore, the device may comprise a control unit configured to adjust an emission time of the auxiliary excitation pulse and/or an emission time of the excitation/depletion pulse such that the auxiliary excitation pulse is temporally overlapped with the excitation part of the excitation/depletion pulse. The control unit may for example be configured to send a trigger signal to the depletion laser source and/or the emission laser source to trigger the emission of the respective pulse. In one example, the depletion and/or excitation laser source may be a gain-switched laser source with an adjustable optical gain and the control unit may be configured to control the gain to adjust the emission time, e.g. by controlling an injection current for a laser diode to generate the respective pulse. In another example, the depletion and/or excitation laser source may be a q-switched laser with an adjustable attenuator and the control unit may be configured to control the adjustable attenuator. In yet another example, the control unit may be configured to control an acousto-optic modulator, an electro-optic modulator, a mechanical shutter or a combination thereof to adjust the emission time of the auxiliary excitation pulse and/or an emission time of the excitation/depletion pulse. In yet another example, the control unit may be configured to adjust the emission time by changing an optical path length for the auxiliary excitation pulse and/or the excitation/depletion pulse. The control unit may be configured to determine a time delay between pulses from the excitation laser source and the depletion laser source, e.g. to adjust the emission time using a feedback loop. The control unit may further be configured to adjust a pulse energy, a pulse duration, a repetition rate and/or a wavelength of the excitation/depletion pulse and/or the auxiliary excitation pulse.

In a preferred embodiment, the excitation wavelength is different from the depletion wavelength. Preferably, the difference between the photon energy corresponding to the excitation wavelength and to the depletion wavelength is larger than a Stokes shift of the imaging marker. This may e.g. facilitate implementing a two-photon excitation scheme as described above, wherein an imaging marker is excited through a two-photon transition by the auxiliary excitation pulse and the excitation part of the excitation/depletion pulse while avoiding two-photon transitions induced by the excitation/depletion pulse itself. In one example, the difference between the excitation wavelength and the depletion wavelength may be larger than 50 nm, preferably larger than 100 nm.

In one example, the time delay Δt may be between 75% and 125%, preferably between 90% and 110%, of the pulse duration of the auxiliary excitation pulse. Furthermore, the control unit may be configured to adjust an emission time of the auxiliary excitation pulse and/or an emission time of the excitation/depletion pulse such that a time delay between the auxiliary excitation pulse and the excitation part of the excitation/depletion pulse is less than 25%, preferably less than 10% of the pulse duration of the auxiliary excitation pulse.

### LIST OF FIGURES

In the following, a detailed description of the invention and exemplary embodiments thereof is given with reference to the figures. The figures show schematic illustrations of
Fig. 1: a pulse-shaping device for stimulated emission depletion microscopy according to an exemplary embodiment of the invention;
Fig. 2a: a pulse sequence comprising an auxiliary excitation pulse as well as excitation and depletion parts of an excitation/depletion pulse in accordance with an embodiment of the invention;
Fig. 2b: an electric field of the excitation part and the depletion part of Fig. 2a;
Fig. 3a: an intensity distribution of an excitation/depletion pulse at a focus point at a first time according to an exemplary embodiment of the invention;
Fig. 3b: an intensity distribution of the excitation/depletion pulse of Fig. 3a at the focus point at a second time;
Fig. 4: an energy spectrum of an imaging marker in accordance with an embodiment of the invention;
Fig. 5: a phase mask in accordance with an embodiment of the invention; and
Fig. 6: a pulse-shaping method for stimulated emission depletion microscopy according to an exemplary embodiment of the invention.

### DESCRIPTION OF THE PREFERRED EMBODIMENTS

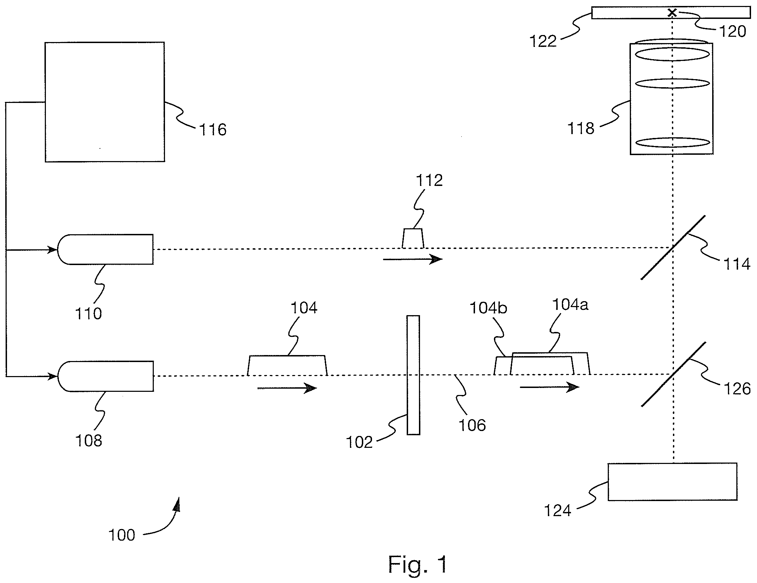

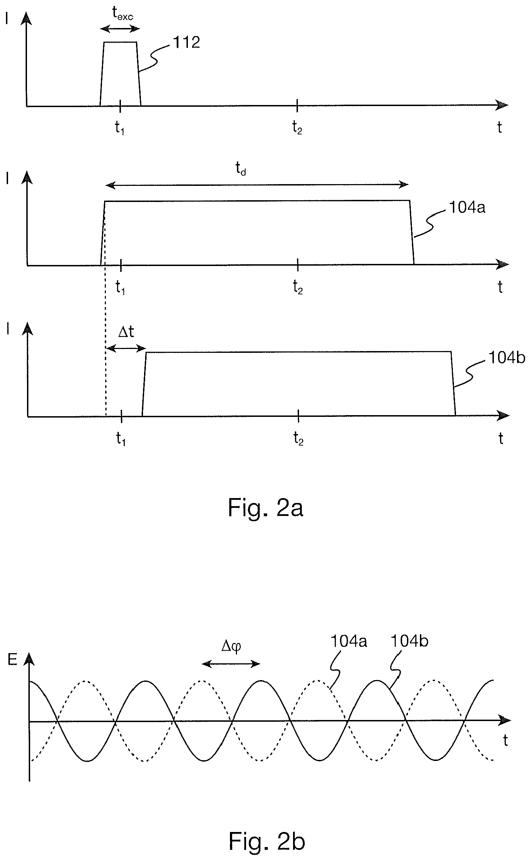

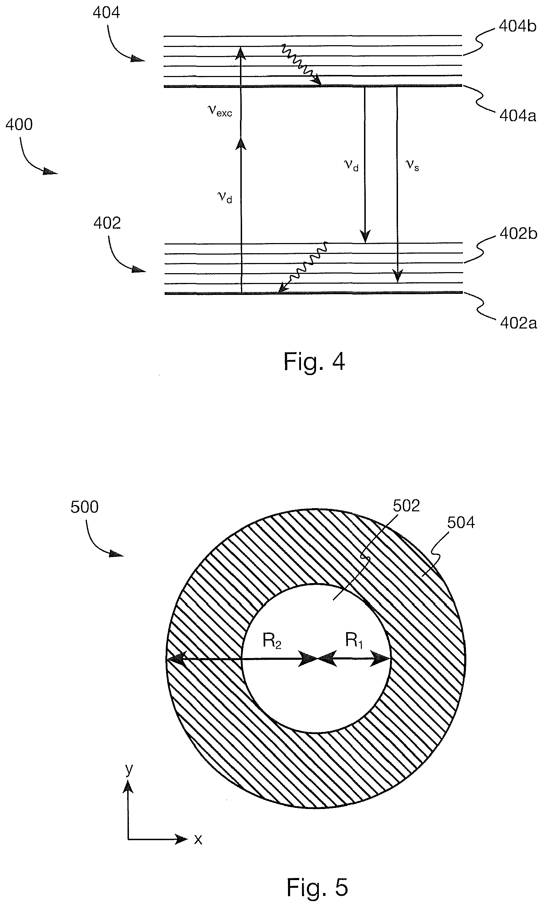

Fig. 1 depicts a pulse-shaping device 100 for stimulated emission depletion (STED) microscopy according to an exemplary embodiment of the invention. The device 100 comprises a pulse shaper 102 that is configured to split an incoming optical excitation/depletion pulse 104 into an excitation part 104a and a depletion part 104b. The pulse shaper 102 is configured to split the excitation/depletion pulse 104 in time, i.e. such that the excitation part 104a and the depletion part 104b both propagate along an optical axis 106, but are separated by a time delay Δt. Accordingly, the arrival times of the excitation part 104a and the depletion part 104b at a given point on the optical axis 106 are separated by Δt as discussed in more detail below with reference to Fig. 2a. The pulse shaper 102 is further configured to create an effective phase difference Δϕ between the excitation part 104a and the depletion part 104b, wherein the effective phase difference Δϕ is the phase difference between the respective electric fields and is between zero and 2π as detailed below with reference to Fig. 2b. The pulse shaper 102 is described in more detail below with reference to Fig. 5.

The device 100 may further comprise a depletion laser source 108 configured to generate the excitation/depletion pulse 104 with a depletion wavelength λ_{d}. The depletion laser source 108 may for example be a pulsed laser source, e.g. a picosecond or femtosecond laser source. The depletion laser source 108 may e.g. be a mode-locked or q-switched laser source. In one example, the depletion laser source 108 is a gain-switched laser source, e.g. a gain-switched diode laser configured to adjust an injection current for a laser diode to generate pulses. In other examples, the depletion laser source 108 may comprise a continuous-wave laser source and a pulse shaping unit that is configured to modulate a laser beam emitted by the continuous-wave laser source to generate the excitation/depletion pulse 104. The pulse shaping unit may e.g. comprise a mechanical shutter, an acousto-optic modulator, an electro-optic modulator or a combination thereof. In some examples, the wavelength of the depletion laser source 108 may be tunable. The depletion laser source 108 may in particular be configured to generate a plurality of laser pulses, e.g. a sequence of excitation/depletion pulses. The depletion laser source 108 may for example be a Ti: Sapphire laser, a diode laser or a Nd:YAG laser and the depletion wavelength λ_{d} may e.g. be between 400 nm and 2200 nm.

The device 100 may further comprise an excitation laser source 110 configured to generate an auxiliary excitation pulse 112 with an excitation wavelength λ_{exc}. Preferably, the excitation wavelength λ_{exc} is different from the depletion wavelength λ_{d}. The excitation laser source 110 may for example be a pulsed laser source, e.g. a picosecond or femtosecond laser source. The excitation laser source 110 may e.g. be a mode-locked or q-switched laser source. In one example, the excitation laser source 110 is a gain-switched laser source, e.g. a gain-switched diode laser configured to adjust an injection current for a laser diode to generate pulses. In other examples, the excitation laser source 110 may comprise a continuous-wave laser source and a pulse shaping unit (not shown) that is configured to modulate a laser beam emitted by the continuous-wave laser source to generate the auxiliary excitation pulse 112. The pulse shaping unit may e.g. comprise a mechanical shutter, an acousto-optic modulator, an electro-optic modulator or a combination thereof. In some examples, the wavelength of the excitation laser source 110 may be tunable. The excitation laser source 110 may in particular be configured to generate a plurality of laser pulses, e.g. a sequence of auxiliary excitation pulses. The excitation laser source 110 may for example be a Ti: Sapphire laser, a diode laser or a Nd:YAG laser and the excitation wavelength λ_{exc} may e.g. be between 400 nm and 2200 nm.

The device 100 may comprise an optical element 114 configured to spatially overlap the excitation/depletion pulse 104 and the auxiliary excitation pulse 112. The optical element 114 may for example be a dichroic mirror, e.g. a dichroic mirror transmitting light at the depletion wavelength λ_{d} and reflecting light at the excitation wavelength λ_{exc}. In other examples, the optical element 114 may be a beam splitter, in particular a polarizing beam splitter, and the excitation/depletion pulse 104 and the auxiliary excitation pulse 112 may have different polarizations. In one example, the auxiliary excitation pulse 112 and the excitation/depletion pulse 104 initially have orthogonal linear polarizations and are overlapped by a polarizing beam splitter. The device 100 may additionally comprise a quarter waveplate that the pulses 112 and 104 pass through after the overlapping to convert the orthogonal linear polarizations to opposite circular polarizations. This may e.g. be advantageous to suppress excitation of imaging markers, in particular single-color two-photon excitations, by photons of only the auxiliary excitation pulse 112 or only the excitation part 104a.

The device 100 may further comprise a control unit 116 that is configured to adjust an emission time of the auxiliary excitation pulse 112 and/or an emission time of the excitation/depletion pulse 104. The control unit 116 may in particular be configured to adjust the emission time such that the auxiliary excitation pulse 112 is temporally overlapped with the excitation part 104a of the excitation/depletion pulse 104 after the spatial overlapping, i.e. a time delay between the auxiliary excitation pulse 112 and the excitation part 104a is smaller than a pulse duration of the auxiliary excitation pulse 112. To adjust the emission time, the control unit 116 may for example be configured to send a trigger signal to the excitation laser source 110 and/or the depletion laser source 108. In one example, the excitation laser source 110 and/or the depletion laser source 108 may be a gain-switched laser source with an adjustable optical gain and the control unit 116 may be configured to control the gain to adjust the emission time, e.g. by controlling an injection current for a laser diode to generate the respective pulse. In one example, the excitation laser source 110 and/or the depletion laser source 108 may be a q-switched laser with an adjustable attenuator and the control unit 116 may be configured to control the adjustable attenuator. In another example, a pulse shaping unit of the excitation laser source 110 and/or the depletion laser source 108 may comprise an acousto-optic modulator and the control unit 116 may be configured to control the acousto-optic modulator. In yet another example, the control unit 116 may be configured to adjust the emission time by changing an optical path length for the auxiliary excitation pulse 112 and/or the excitation/depletion pulse 104. The control unit 116 may further be configured to adjust a pulse energy, a pulse duration, a repetition rate and/or a wavelength of the excitation/depletion pulse 104 and/or the auxiliary excitation pulse 112.

The device 100 may further comprise an objective 118 configured to focus the excitation/depletion pulse 104 and the auxiliary excitation pulse 112 onto a focus point 120, e.g. to image a sample 122. The objective 118 may for example be a high-NA objective with a numerical aperture greater than 0.5. The objective 118 may be configured to move the focus point 120 along the optical axis 106, e.g. to focus the excitation/depletion pulse 104 and the auxiliary excitation pulse 112 onto the sample 122. The device 100 may also comprise a scanning unit (not shown in Fig. 1) that is configured to scan the focus point 120 in an image plane perpendicular to the optical axis 106, e.g. to scan the focus point 120 across the sample 122. The scanning unit may for example comprise an adjustable optical element like a piezo-actuated mirror, an acousto-optic deflector or a digital micromirror device. The sample 122 may comprise imaging markers, e.g. to label specific constituents of the sample 122. The imaging markers may in particular be fluorophores, e.g. fluorescent proteins or nitrogen-vacancy centers. The device 100 may for example be used to determine the distribution of imaging markers in the sample 122.

The device 100 may further comprise a detector 124 configured to detect light emitted from the sample 122, e.g. fluorescence. The detector 124 may be a point-like detector, e.g. a photodiode, or may be a camera, for example a CCD or CMOS camera. To isolate fluorescence emitted from the sample 122, e.g. to separate fluorescence from scattered light of the excitation/depletion pulse 104 or the auxiliary excitation pulse 112, a splitting element 126 may be placed in front of the detector 124. The splitting element 126 may for example be a dichroic mirror or an optical filter with a wavelength-dependent transmission and/or reflection. The device 100 may further comprise polarizing optics, e.g. a waveplate and/or a polarizer, to perform polarization-selective detection. In combination with excitation by the auxiliary excitation pulse 112 and the excitation part 104a with opposite circular polarizations, this may be advantageous to suppress background signals, e.g. arising from single-color two-photon excitation by a single pulse.

Fig. 2a illustrates an exemplary pulse sequence in accordance with an embodiment of the invention, which may e.g. be generated with the device 100. The pulse sequence comprises the auxiliary excitation pulse 112 as well as the excitation part 104a and the depletion part 104b of the excitation/depletion pulse 104. For each of the pulses, a schematic illustration of the evolution of the respective average intensity I as a function of the time t is shown, wherein the average intensity I is the intensity averaged over a plane perpendicular to the optical axis 106 at a given point in time. The plane may e.g. be a plane containing the focus point 120.

The auxiliary excitation pulse 112 has a pulse duration t_{exc} and may e.g. arrive at the focus point 120 centered at a first time t₁. The pulse duration t_{exc} may for example be between 0.1 ps and 1 ps. The excitation/depletion pulse 104 is split into the excitation part 104a and the depletion part 104b by the pulse shaper 102. The excitation part 104a and the depletion part 104b are separated by the time delay Δt. Preferably, the excitation/depletion pulse 104 is split such that the excitation part 104a arrives at the focus point before the depletion part 104b. The depletion part 104b may e.g. arrive at the focus point centered at a second time t2. Preferably, the auxiliary excitation pulse 112 is temporally overlapped with the excitation part 104a. In one example, the time delay between the auxiliary excitation pulse 112 and the excitation part 104a is smaller than 25%, preferably smaller than 10%, of the pulse duration t_{exc} of the auxiliary excitation pulse 112. In a preferred embodiment, the time delay Δt is between 75% and 125%, preferably between 90% and 110%, of the pulse duration t_{exc} of the auxiliary excitation pulse 112. Thereby, depletion of an excited state of imaging markers in the sample 122 by the part of the excitation part 104a that arrives after the end of the auxiliary excitation pulse and before the arrival of the depletion pulse 104b may be reduced.

The excitation/depletion pulse 104 has a pulse duration t_{d}. Preferably, the pulse duration t_{d} is larger than t_{exc}, e.g. to ensure an effective depletion of the exited state by the excitation/depletion pulse 104. The pulse duration t_{d} may e.g. be between 1 ps and 1000 ps. In a preferred embodiment, the pulse duration t_{d} is much larger than the time delay Δt, e.g. to reduce depletion of the exited state by the part of the depletion part 104b that arrives after the end of the excitation part 104a. In one example, the time delay Δt is less than 10%, preferably less than 2% of the pulse duration t_{d}. In other examples, the time delay Δt may be on the same order of magnitude as the pulse duration t_{d}, e.g. between 10% and 50% of t_{d}. This may e.g. allow for implementing a background subtraction as detailed below. The pulse duration of the excitation part 104a and of the depletion part 104b may be equal to t_{d}. In other examples, the pulse shaper 102 may be configured to modify the pulse duration of the excitation part 104a and/or the depletion part 104b. The pulse shape 102 may e.g. be configured to compress or stretch the excitation part 104a and/or the depletion part 104b such that the pulse duration of the excitation part 104a and/or the depletion part 104b is shorter or larger than t_{d} as detailed below with reference to Fig. 5.

Fig. 2b depicts an electric field E of the excitation part 104a and the depletion part 104b as a function of time, e.g. the electric field at the focus point 120 around the time t₂. The period of time shown in Fig. 2b may be very small compared to the pulse duration t_{d} of the excitation/depletion pulse 104 and, depending on the depletion wavelength λ_{d}, may e.g. be between 5 fs and 15 fs. The pulse shaper 102 is configured to create an effective phase difference Δϕ between the electric fields of the excitation part 104a and the depletion part 104b, e.g. such that the respective electric fields oscillate out of phase. The effective phase difference Δϕ may determine how the excitation part 104a and the depletion part 104b interfere and may thus determine the resulting intensity distribution of the excitation/depletion pulse 104 in the vicinity of the focus point 120. In the example shown in Fig. 2b, the effective phase difference is Δϕ = π and the excitation part 104a and the depletion part 104b interfere destructively.

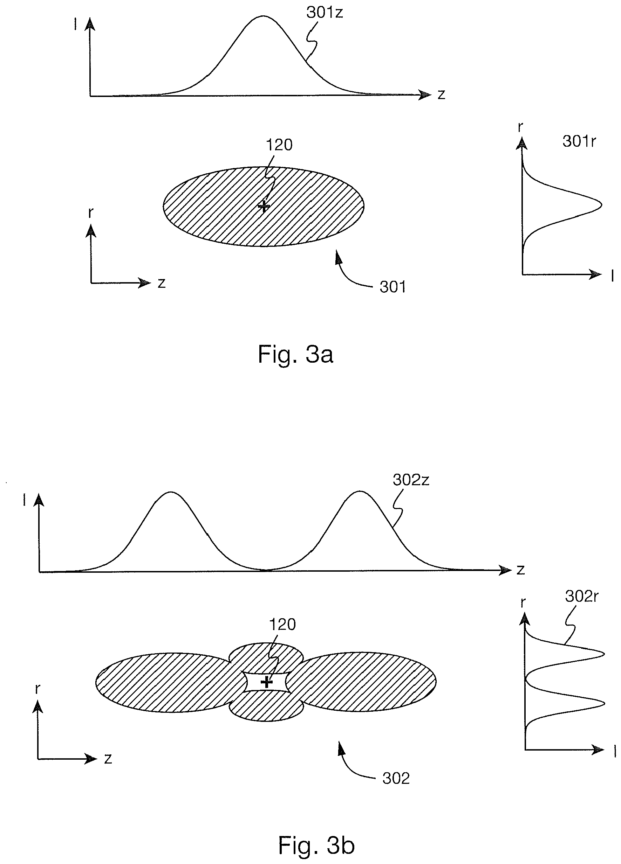

The time delay Δt and the effective phase difference Δϕ determine how the intensity distribution of the excitation/depletion pulse 104 in the vicinity of the focus point 120 evolves in time. The time delay Δt and the effective phase difference Δϕ are chosen such that the excitation/depletion pulse 104, when focused onto the focus point 120, has an intensity distribution with a local maximum at the focus point 120 at a first time t₁ and an intensity distribution with a local minimum at the focus point 120 at a second time t₂. A schematic illustration of the intensity distribution 301 of the excitation/depletion pulse 104 around the focus point 120 at the first time t₁ and the corresponding intensity distribution 302 at the second time t₂ is shown in Fig. 3a and 3b, respectively. In both figures, the main plot depicts the respective intensity distribution 301, 302 in the r-z-plane, wherein z is a coordinate along the optical axis 106 and r is a radial coordinate perpendicular to the optical axis 106. The striped area indicates an area, in which the intensity is larger than a certain threshold intensity, e.g. 1/e² of the maximum intensity of the respective intensity distribution. The upper plot depicts the intensity distribution 301z, 302z along the optical axis as a function of z and the plot on the right depicts the intensity distribution 301r, 302r along a radial direction as a function of r.

In the example shown in Fig. 2a, the depletion part 104b has not yet arrived at the focus point 120 at the first time t1 and the intensity distribution 301 of the excitation/depletion pulse 104 thus corresponds to the intensity distribution of the excitation part 104a, which is focused onto the focus point 120 by the objective 118. Preferably, the intensity distribution 301 of the excitation part 104a has a global maximum at the focus point 120. The intensity distribution 301 of the excitation part 104a may for example be Gaussian or an Airy pattern in the radial direction. In some examples, the intensity distribution 301 maybe rotationally symmetric around the optical axis. The intensity distribution 301 of the excitation part 104a and of the auxiliary excitation pulse 112 may be adapted to each other, e.g. to maximize a spatial overlap between the excitation part 104a and the auxiliary excitation pulse 112. Preferably, the excitation part 104a is focused tightly to minimize the region in which imaging markers can be excited. In one example, a waist of the intensity distribution 301 at the focus point is smaller than the depletion wavelength λ_{d}.

The intensity distribution 302 at the second time t₂ exhibits a local minimum at the focus point 120. In the example shown in Fig. 3b, the intensity distribution 302 has a double-peak structure with a minimum surrounded by two maxima along both z and r. In some examples, the intensity distribution 302 maybe rotationally symmetric around the optical axis. Accordingly, the intensity distribution 302 may exhibit a doughnut-like shape in the plane perpendicular to the optical axis with a minimum at the center surrounded by areas of high intensity. In one example, the intensity at the focus point 120 may be less than 1%, preferably less than 0.1% of a global maximum of the intensity distribution 302.

In the example shown in Fig. 2a, both the excitation part 104a and the depletion part 104b have reached the focus point 120 at the second time t2 and the two parts interfere, forming the intensity distribution 302. The intensity distribution 302 can thus depend on the effective phase difference Δϕ as well as on the intensity distributions of the excitation part 104a and of the depletion part 104b. The effective phase difference Δϕ may be chosen such that the excitation part 104a and the depletion part 104b interfere destructively at the focus point 120. In one example, the effective phase difference Δϕ is between 0.9π and 1.1π, preferably between 0.99π and 1.01π. An average pulse power of the excitation part 104a may be chosen such that the intensity of the excitation part 104a at the focus point 120 is between 90% and 110%, preferably between 99% and 101%, of the intensity of the depletion part 104b at the focus point 120.

In some examples, the excitation part 104a passes the focus point 120 before the depletion part 104b such that at a third time only the depletion part 104b is present. The intensity distribution at the third time may thus correspond to the intensity distribution of the depletion part 104b. The intensity at the focus point 120 at the third time may be larger than at the second time. In one example, the intensity distribution of the depletion part 104b may exhibit a local maximum at the focus point 120. Thereby, excited imaging markers in the vicinity of the focus point 120 may be depleted. This may for example be used for background subtraction without requiring additional laser pulses. A background signal may be determined by measuring light emitted from the sample during a time interval around or after the third time, which may be subtracted from a fluorescence signal from the sample determined during a time interval around the second time.

In other examples, the excitation part 104a may already have passed the focus point 120 at the second time t₂ and the intensity distribution 302 may thus correspond to the intensity distribution of the depletion part 104b. A phase pattern and/or intensity distribution of the depletion part 104b may be chosen such that the intensity distribution of the depletion part 104b exhibits a minimum at the focus point 120. In one example, the pulse shaper 102 is configured to imprint a vortex-like phase pattern onto the depletion part 104b as detailed below.

Fig. 4 depicts an example for an energy level scheme or energy spectrum 400 of an imaging marker, which may be used for labeling the sample 122, e.g. specific constituents of the sample 122. The energy spectrum 400 comprises an electronic ground state manifold 402 and an excited electronic state manifold 404, each of which may comprise a plurality of vibrational substates. The electronic ground state manifold 402 can for example comprise a vibrational ground state 402a and a plurality of excited vibrational states 402b. Similarly, the excited electronic state manifold 402 can comprise a vibrational ground state 404a and a plurality of excited vibrational states 404b.

In a preferred embodiment, the depletion wavelength λ_{d}, corresponding to an optical depletion frequency v_{d}, and the excitation wavelength λ_{exc}, corresponding to an optical excitation frequency v_{exc}, are chosen such that the sum of the excitation frequency v_{exc} and the depletion frequency v_{d} is resonant with a transition between the electronic ground state manifold 402 and the excited electronic state manifold 404, e.g. a transition between the state 402a and one of the excited vibrational states 404b. In this case, a two-photon transition between the electronic ground state manifold 402 and the excited electronic state manifold 404 may be excited by simultaneous absorption of a photon from the auxiliary excitation pulse 112 and a photon from the excitation/depletion pulse 104, e.g. the excitation part 104a. The excitation probability of an imaging marker can thus depend on the intensity of the auxiliary excitation pulse 112 and of the excitation part 104a of the excitation/depletion pulse 104 at the position of the imaging marker. Therefore, precise overlapping of the auxiliary excitation pulse 112 and the excitation part 104a may be advantageous to increase the excitation probability. Furthermore, the nonlinear dependence of the excitation probability on the intensities, i.e. the dependence on the intensity of both the auxiliary excitation pulse 112 and of the excitation part 104a, may limit the excitation of imaging markers to a region around the focus point 120 that is smaller than the extent of the intensity distribution 301, which may be advantageous for improving the imaging resolution. As described above, the excitation wavelength λ_{exc} is preferably different from the depletion wavelength λ_{d} such that the imaging markers can be excited by two-color two-photon transitions. This may be advantageous to prevent single-color two-photon excitations by the auxiliary excitation pulse and/or the excitation/depletion pulse, e.g. by choosing the difference between the excitation wavelength λ_{exc} and the depletion wavelength λ_{d} to be larger than the spectral width of the excited electronic state manifold 404. In addition, two-color two-photon excitation facilitates the use of a wide variety of imaging markers as the excitation wavelength λ_{exc} and/or the depletion wavelength λ_{d} may be adjusted to the energy spectrum 400.

The depletion wavelength λ_{d} may be resonant with a single-photon transition between the electronic ground state manifold 402 and the excited electronic state manifold 404, preferably a transition between the vibrational ground state 404a of the excited electronic state manifold 404 and an excited vibrational state 402b. In this way, excited imaging markers, which can quickly relax to the state 404a e.g. through interactions with their environment in the sample 122, may be transferred to the ground state manifold 402 by stimulated emission induced by the excitation/depletion pulse 104. Subsequent relaxation to the ground state 402a may prevent re-excitation by the excitation/depletion pulse 104. The depletion probability of an imaging marker may depend nonlinearly on the time-integrated intensity of the excitation/depletion pulse 104 at the position of the imaging marker. The probability for an excited imaging marker to remain in the excited electronic state manifold 404 may for example decrease exponentially with the time-integrated intensity. Correspondingly, only imaging markers close to the focus point 120 may remain in the excited state manifold 404 and subsequently relax to the ground state manifold 402 by spontaneous emission with an emission wavelength λₛ corresponding to an optical emission frequency vₛ. The spontaneously emitted photons may e.g. be detected by the detector 124.

To split the excitation/depletion pulse 104 and to create the effective phase difference Δϕ, the pulse shaper 102 may for example comprise a phase mask with a spatially varying optical path length at the depletion wavelength, e.g. a transmissive phase mask that the excitation/depletion pulse 104 passes through as shown in Fig. 1 or a reflective phase mask that the excitation/depletion pulse 104 is reflected off. Fig. 5 depicts an example for a transmissive phase mask 500. The phase mask 500 may for example comprise two regions 502 and 504, wherein the part of the excitation/depletion pulse 104 passing through the region 502 forms the excitation part 104a and the part of the excitation/depletion pulse 104 passing through the region 504 forms the depletion part 104b.

The phase mask 500 may e.g. have a first optical path length at the depletion wavelength in the region 502 and a second optical path length at the depletion wavelength in the region 504. The optical path length determines the phase shift that light at the depletion wavelength acquires when passing through the phase mask 500. Thus, the difference Δl between the first and second optical path lengths may determine the time delay Δt and the effective phase difference Δϕ between the excitation part 104a and the depletion part 104b. The optical path length difference may be expressed as Δl = (*m* + δ*m*) λ_{d}, wherein *m* is integer and 0 ≤ δ*m* < 1. The time delay Δt is then given by Δt = (*m* + δ*m*)/v_{d} and the effective phase difference Δϕ by Δϕ = 2π δ*m*. In one example, δ*m* may be between 0.45 and 0.55, preferably between 0.495 and 0.505. The integer part *m* may for example be larger than 5, in some examples larger than 50, preferably larger than 200.

The optical path length difference may for example be realized by using a different thickness of the phase mask 500 in the regions 502 and 504, e.g. a first thickness in region 502 and a second thickness in region 504. Alternatively or additionally, the phase mask 500 may comprise different materials in regions 502 and 504, in particular materials with different indices of refraction. In one example, the region 502 may be a hole or cut-out in the region 504. The phase mask 500 may for example comprise BK7 glass and/or fused silica. The optical path length within each of the regions 502 and 504 may be constant. In other examples, the optical path length may vary spatially within one or both regions, e.g. to imprint a phase pattern on the respective part of the excitation/depletion pulse 104. In one example, a vortex-like phase pattern with a 2π phase shift around the azimuthal direction may be imprinted on the depletion part 104b, e.g. to create a doughnut-shaped intensity distribution around the focus point 120 at the second time t₂ when the pulse duration of the excitation part 104a is shorter than the time delay Δt. In some examples, the phase mask 500 may be an adaptive phase mask, e.g. a liquid-crystal spatial light modulator, and may be configured to adjust a size, shape and/or position of the regions 502 and 504. The adaptive phase mask may also be configured to adapt the local optical path length to a phase pattern and/or intensity distribution of the excitation/depletion pulse 104 at the position of the phase mask 500.

The phase mask 500 may exhibit a dispersion, i.e. a wavelength-dependent optical path length, e.g. to compress or stretch the excitation part 104a and/or the depletion part 104b. The region 502 may for example exhibit a negative dispersion, wherein a negative dispersion corresponds to an optical path length that decreases with the wavelength. Thereby, the excitation part 104a can be compressed such that the pulse duration of the excitation part 104 is shorter than the pulse duration t_{d} of the excitation/depletion pulse 104. The excitation part 104a may e.g. have a similar pulse duration as the auxiliary excitation pulse 112. Additionally or alternatively, the region 504 may for example exhibit a positive dispersion, wherein a positive dispersion corresponds to an optical path length that increases with the wavelength. Thereby, the depletion part 104b can be stretched or chirped such that the pulse duration of the depletion part 104b is longer than the pulse duration t_{d} of the excitation/depletion pulse 104. In one example, the pulse duration of the excitation part 104a and/or the depletion part 104b is adjusted such that the pulse duration of the excitation part 104a is smaller than the time delay Δt, e.g. such that the excitation part 104a has already passed the focus point 120 at the second time t₂. Correspondingly, the region 504 may be configured to imprint a vortex-lilce phase pattern onto the depletion part 104a to create a doughnut-shaped intensity distribution in the radial plane around the focus point 120 at the second time t₂.

The size, shape and position of the regions 502 and 504 may be adapted to create the desired intensity distributions 301 and 302 around the focus point 120 at the first and second times t₁ and t₂, respectively. In particular, the regions 502 and 504 may be adapted to an intensity distribution of the excitation/depletion pulse 104 at the position of the phase mask 500. The regions 502 and 504 may for example be chosen such that an average pulse power of the excitation part 104a is between 90% and 110%, preferably between 99% and 101%, of an average pulse power of the depletion part 104b, e.g. to reduce the intensity at the focus point 120. In the example shown in Fig. 5, the region 502 has a circular shape with a radius R₁ and is surrounded by the region 504, which has an annular shape with an inner radius R₁ and an outer radius R₂. The radii R₁ and R₂ may be adapted to the intensity distribution of the excitation/depletion pulse 104 at the position of the phase mask 500, e.g. to control the average pulse powers of the excitation part 104a and/or the depletion part 104b. For a phase mask 500 as depicted in Fig. 5, an effective phase difference Δϕ of π may be used such that the excitation part 104a and the depletion part 104b interfere destructively at the focus point 120. In other examples, the shape of the regions 502 and 504 may be different, e.g. elliptical or hexagonal.

Additionally or alternatively, the pulse shaper 102 may comprise other optical elements. In one example, the pulse shaper 102 may comprise a mirror that is configured to retro-reflect the excitation/depletion pulse 104. Similar to the phase mask 500, the mirror may comprise two regions with different thickness such that the two regions are located at different positions along the optical axis 106, e.g. to create the time delay Δt and/or the effective phase difference Δϕ between the parts of the excitation/depletion pulse 104 reflected off the two regions. In other examples, the pulse shaper 102 may comprise an electro-optic modulator, e.g. an electro-optic modulator with a spatially varying electric field and/or an active medium with two regions with different electro-optic properties. The pulse shaper 102 may also comprise additional pulse shaping elements, e.g. to stretch or compress the excitation part 104a and/or the depletion part 104b in time.

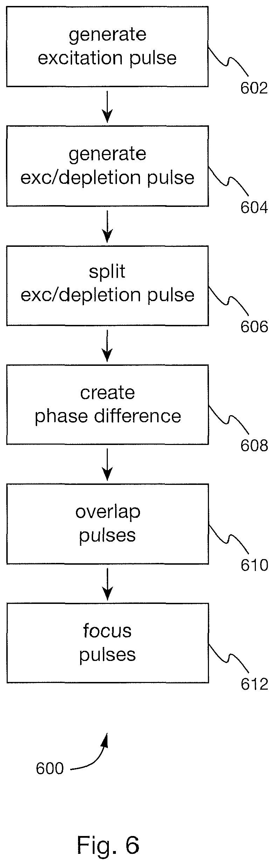

Fig. 6 depicts a flowchart of a pulse-shaping method 600 for stimulated emission depletion microscopy according to an exemplary embodiment of the invention. The method 600 may for example be implemented with the device 100 and is described in the following with reference to Fig. 1. This is, however, not intended to be limiting and the method 600 may be implemented with any other suitable device. The order of the steps in the flow chart shown in Fig. 6 only constitutes a specific example and the method 600 is not limited to a certain order of execution. As far as technically feasible, the steps can be permuted and the method and any embodiment thereof can be performed in an arbitrary order of these steps. In particular, steps may be performed simultaneously at least in part.

The method 600 may comprise, in 602, generating the auxiliary excitation pulse 112, e.g. using the excitation laser source 110. In some examples, the excitation laser source 110 may be triggered by the control unit 116 as described above to generate the auxiliary excitation pulse 112, e.g. to control a time delay between the excitation/depletion pulse 104 and the auxiliary excitation pulse 112. Generating the auxiliary excitation pulse 112 may further comprise adjusting a pulse energy, pulse shape, pulse duration, phase pattern and/or spatial intensity distribution of the auxiliary excitation pulse 112. The excitation wavelength λ_{exc} may be adapted to an energy spectrum of imaging markers in the sample 122, e.g. as described above with reference to Fig. 4.

In 604, the excitation/depletion pulse 104 is generated, e.g. using the depletion laser source 108. In some examples, the depletion laser source 108 may be triggered by the control unit 116 as described above to generate the excitation/depletion pulse 104, e.g. to control a time delay between the excitation/depletion pulse 104 and the auxiliary excitation pulse 112. Generating the excitation/depletion pulse 104 may further comprise adjusting a pulse energy, pulse shape, pulse duration, phase pattern and/or spatial intensity distribution of the excitation/depletion pulse 104. The excitation/depletion pulse 104 may for example have a Gaussian intensity profile or a flat-top intensity profile perpendicular to the optical axis 106. The depletion wavelength λ_{d} may be adapted to the energy spectrum of imaging markers in the sample 122, e.g. as described above with reference to Fig. 4. In particular, the depletion wavelength λ_{d} may be resonant with a single-photon transition between the ground state manifold 402 and the excited state manifold 404 and the combination of the excitation wavelength λ_{exc} and the depletion wavelength λ_{d} may be chosen such a two-photon excitation involving a photon having the excitation wavelength and a photon having the depletion wavelength is resonant with a transition between the ground state manifold 402 and the excited state manifold 404. Preferably, the depletion wavelength λ_{d} is different from the excitation wavelength λ_{exc}.

In 606, the excitation/depletion pulse 104 is split in time into the excitation part 104a and the depletion part 104b. As described above, the excitation part 104a and the depletion part 104b propagate along the optical axis 106 and are separated by the time delay Δt. The excitation/depletion pulse 104 may for example be split by causing the excitation/depletion pulse 104 to traverse through the pulse shaper 102. In one example, the excitation part 104a has a circular intensity distribution and the depletion part 104b has an annular intensity distribution, e.g. by using the phase mask 500 depicted in Fig. 5.

The method 600 further comprises, in 608, creating the effective phase difference Δϕ between the excitation part 104a and the depletion part 104b. The effective phase difference Δϕ may for example be created by sending the excitation/depletion pulse 104 through the pulse shaper 102.

The method 600 may further comprise, in 610, temporally and spatially overlapping the auxiliary excitation pulse 112 with the excitation part 104a of the excitation/depletion pulse 104, e.g. at the optical element 114. This may comprise adjusting a propagation direction and/or a spatial intensity distribution of the excitation/depletion pulse 104 and/or the auxiliary excitation pulse 112, e.g. to maximize the spatial overlap between the auxiliary excitation pulse 112 and the excitation part 104a around the focus point 120. This may further comprise adjusting an emission time and/or optical path length of the excitation/depletion pulse 104 and/or the auxiliary excitation pulse 112, e.g. to minimize the time delay between the auxiliary excitation pulse 112 and excitation part 104a at the focus point 120.

In 612, the excitation/depletion pulse 104 is focused onto the focus point 120, e.g. by the objective 118. This may also comprise focusing the auxiliary excitation pulse 112, e.g. onto the focus point 120.

As described above, the time delay Δt and the effective phase difference Δϕ are chosen such that the intensity distribution of the excitation/depletion pulse 104 has a local maximum at the focus point 120 at the first time t₁ and a local minimum at the focus point 120 at the second time t₂. Furthermore, the phase pattern and/or the spatial and/or temporal intensity distribution of the excitation part 104a and/or the depletion part 104b may be adapted to achieve the desired intensity distributions 301, 302 of the excitation/depletion pulse 104 around the focus point 120.

In a preferred embodiment, the intensity distribution of the excitation/depletion pulse 104 has a global maximum at the focus point 120 at the first time. An intensity profile of the auxiliary excitation pulse 112 may also exhibit a local or global maximum at the focus point 120. Preferably, an intensity of the excitation/depletion pulse 104 at the focus point 120 at the second time t₂ is less than 1%, preferably less than 0.1%, of the global maximum of the intensity distribution 302 of the excitation/depletion pulse 104 at the second time t₂. In one example, the intensity distribution 302 around the focus point 120 may be maintained for an extended period of time, e.g. more than 50%, preferably more than 80% of the pulse duration t_{d}. The time delay Δt may e.g. be between 75% and 125%, preferably between 90% and 110%, of the pulse duration t_{exc} of the auxiliary excitation pulse, e.g. to minimize the temporal overlap between the auxiliary excitation pulse 112 and depletion part 104b.

The method 600 may further comprise detecting a fluorescence signal from the sample 122, e.g. by imaging the focus point 120 onto the detector 124. This may for example allow for determining a concentration of imaging markers in the vicinity of the focus point 120. The method 600 may be repeated multiple times, e.g. using different focus points 120. In one example, the focus point 120 may be scanned over a region of interest in the sample 122, e.g. to determine the concentration of imaging markers in the region of interest. For this, a continuous sequence of excitation/depletion pulses 104 and auxiliary excitation pulses 112 may be emitted by the laser sources 108 and 110, respectively, while scanning the focus point 120 over the region of interest.

The embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

100 - pulse-shaping device
102 - pulse shaper
104 - excitation/depletion pulse
104a - excitation part of the excitation/depletion pulse
104b - depletion part of the excitation/depletion pulse
106 - optical axis
108 - depletion laser source
110 - excitation laser source
112 - auxiliary excitation pulse
114 - optical element for overlapping
116 - control unit
118 - objective
120 - focus point
122 - sample
124 - detector
126 - splitting element
t₁ - first time
t₂ - second time
t_{exc} - pulse duration of auxiliary excitation pulse
t_{d} - pulse duration of excitation/depletion pulse
Δt - time delay between excitation part and depletion part
Δϕ - effective phase difference between excitation part and depletion part
301 - intensity distribution of the excitation/depletion pulse at time t₁
301r - cut through intensity distribution 301 in a radial direction
301z - cut through intensity distribution 301 in the axial direction
302 - intensity distribution of the excitation/depletion pulse at time t₂
302r - cut through intensity distribution 302 in a radial direction
302z - cut through intensity distribution 302 in the axial direction
400 - energy spectrum of imaging marker
402 - electronic ground state manifold
402a - vibrational ground state of electronic ground state manifold
402b - excited vibrational states of electronic ground state manifold
404 - excited electronic state manifold
404a - vibrational ground state of excited electronic state manifold
404b - excited vibrational states of excited electronic state manifold
v_{d} - optical frequency corresponding to depletion wavelength
v_{exc} - optical frequency corresponding to excitation wavelength
vs - optical frequency corresponding to emission wavelength
500 - phase mask
502 - first region of phase mask
504 - second region of phase mask
R₁ - inner radius
R₂ - outer radius
600 - pulse-shaping method
602 - step of generating auxiliary excitation pulse
604 - step of generating excitation/depletion pulse
606 - step of splitting excitation/depletion pulse into excitation and depletion part
608 - step of creating phase difference between excitation and depletion part
610 - step of overlapping auxiliary excitation pulse with excitation/depletion pulse
612 - step of focusing excitation/depletion pulse and auxiliary excitation pulse onto focus point

## Claims

1. A pulse-shaping method for stimulated emission depletion (STED) microscopy, the method comprising:
generating an optical excitation/depletion pulse (104) with a depletion wavelength λ_{d};
splitting the excitation/depletion pulse (104) in time into an excitation part (104a) and a depletion part (104b) such that the excitation part (104a) and the depletion part (104b) propagate along an optical axis (106) and are separated by a time delay Δt;
creating an effective phase difference Δϕ between the excitation part (104a) and the depletion part (104b); and
focusing the excitation part (104a) and the depletion part (104b) of the excitation/depletion pulse (104) onto a focus point (120),
wherein the time delay Δt and the effective phase difference Δϕ are chosen such that an intensity distribution of the excitation/depletion pulse (104) has a local maximum at the focus point (120) at a first time and a local minimum at the focus point (120) at a second time.

2. The method of claim 1, wherein an intensity of the excitation/depletion pulse (104) at the focus point (120) at the second time is less than 1%, preferably less than 0.1% of a global maximum of the intensity distribution of the excitation/depletion pulse (104) at the second time.

3. The method of claim 1 or 2, wherein the excitation/depletion pulse (104) is split using a phase mask (500) with a spatially varying optical path length through which the excitation/depletion pulse (104) passes or that the excitation/depletion pulse (104) is reflected off and/or wherein, prior to focusing, the excitation part (104a) has a circular or elliptical intensity distribution and the depletion part (104b) has an annular intensity distribution.

4. The method according to any one of the preceding claims, wherein the effective phase difference Δϕ is between 0.9π and 1.1π, preferably between 0.99π and 1.01π and/or wherein the time delay is larger than 5 times the period corresponding to the depletion wavelength, preferably larger than 200 times the period corresponding to the depletion wavelength.

5. The method according to any one of the preceding claims, wherein splitting the excitation/depletion pulse (104) in time comprises compressing and/or stretching a pulse duration of the excitation part (104a) and/or the depletion part (104b) and/or wherein creating an effective phase difference between the excitation part (104a) and the depletion part (104b) comprises imprinting a phase pattern onto the excitation part (104a) and/or the depletion part (104b).

6. The method according to any one of the preceding claims, wherein the depletion wavelength is resonant with a depletion transition of an imaging marker.

7. The method according to any one of the preceding claims, further comprising
generating an optical auxiliary excitation pulse (112) with an excitation wavelength λ_{exc}; and
temporally and spatially overlapping the optical auxiliary excitation pulse (112) with the excitation part (104a) of the excitation/depletion pulse (104),
wherein the excitation wavelength and the depletion wavelength are chosen such that a two-photon excitation involving a photon having the excitation wavelength and a photon having the depletion wavelength is resonant with an excitation transition of the imaging marker, in particular wherein the excitation wavelength is different from the depletion wavelength and/or wherein the time delay Δt is between 75% and 125%, preferably between 90% and 110%, of the pulse duration of the auxiliary excitation pulse (112).

8. A pulse-shaping device (100) for stimulated emission depletion (STED) microscopy, the device (100) comprising a pulse shaper (102) configured for splitting an optical excitation/depletion pulse (104) with a depletion wavelength λ_{d} into an excitation part (104a) and a depletion part (104b), wherein
the pulse shaper (102) is configured to split the excitation/depletion pulse (104) in time such that the excitation part (104a) and the depletion part (104b) propagate along an optical axis (106) and are separated by a time delay Δt;
the pulse shaper (102) is configured to create an effective phase difference Δϕ between the excitation part (104a) and the depletion part (104b); and
the time delay Δt and the effective phase difference Δϕ are such that the excitation/depletion pulse (104), when focused onto a focus point (120), has an intensity distribution with a local maximum at the focus point (120) at a first time and an intensity distribution with a local minimum at the focus point (120) at a second time.

9. The device (100) of claim 8, wherein the pulse shaper (102) comprises a phase mask (500) with a spatially varying optical path length at the depletion wavelength, in particular a phase mask (500) comprising a circular or elliptical inner portion (502) with a first optical path length at the depletion wavelength and an annular outer portion (504) with a second optical path length at the depletion wavelength, in particular wherein a difference between the first and second optical path lengths is between (*m*+0.45)λ_{d} and (*m*+0.55)λ_{d}, preferably between (*m*+0.495)λ_{d} and (*m*+0.505)λ_{d}, wherein *m* is an integer and *m* > 5, preferably *m* > 200.

10. The device (100) of claims 8 or 9, wherein the pulse shaper (102) is configured to compress and/or stretch a pulse duration of the excitation part (104a) and/or the depletion part (104b) and/or wherein the pulse shaper (102) is configured to imprint a phase pattern onto the excitation part (104a) and/or the depletion part (104b).

11. The device (100) according to any one of claims 8 to 10, further comprising a depletion laser source (108) configured to emit the excitation/depletion pulse (104).

12. The device (100) according to any one of claims 8 to 11, wherein an average pulse power of the excitation part (104a) is between 90% and 110%, preferably between 99% and 101%, of an average pulse power of the depletion part (104b).

13. The device (100) according to any one of claims 8 to 12, further comprising an objective (118) configured to focus the excitation/depletion pulse (104) onto the focus point (120).

14. The device (100) according to any one of claims 8 to 13, further comprising an excitation laser source (110) configured to emit an auxiliary excitation pulse (112) with an excitation wavelength λ_{exc}, wherein the auxiliary excitation pulse (112) is spatially overlapped with the excitation/depletion pulse (104), preferably further comprising a control unit (116) configured to adjust an emission time of the auxiliary excitation pulse (112) and/or an emission time of the excitation/depletion pulse (104) such that the auxiliary excitation pulse (112) is temporally overlapped with the excitation part (104a) of the excitation/depletion pulse (104).

15. The device (100) of claim 14, wherein the excitation wavelength is different from the depletion wavelength and/or wherein the time delay Δt is between 75% and 125%, preferably between 90% and 110%, of the pulse duration of the auxiliary excitation pulse (112).
